# EUROPEAN PATENT SPECIFICATION

(11) **EP 0 540 015 B1**
(45) Date of publication and mention of the grant of the patent: **17.01.1996**
(21) Application number: 92118582.3
(22) Date of filing: 30.10.1992
(51) Int. Cl.: F15B 15/08

(54) **Rodless cylinder**
Kolbenstangenloser Arbeitszylinder
Vérin sans tige

(30) Priority: 01.11.1991 JP 288121/91
(43) Date of publication of application: 05.05.1993
(73) Proprietor: SMC KABUSHIKI KAISHA, Minato-ku Tokyo 105 (JP)
(72) Inventor: Takada, Yoshiyuki, c/o SMC KABUSHIKI KAISHA, Tokyo 105 (JP); Miyamoto, Michikazu, c/o SMC KABUSHIKI KAISHA, Tsukuba-gun,Ibaraki-ken (JP)
(74) Representative: Keil, Rainer A., Dipl.-Phys. Dr.

(56) References cited:
- EP-A- 0 177 850
- EP-A- 0 294 350
- VDI ZEITSCHRIFT, vol. 129, no. 5, May 1987, DUESSELDORF, pages 104 - 108, Karl Gerwers 'Das Al-Strangpressprofil als Grundlage für den kolbenstangenlosen Pneumatikzylinder'

## Description

### BACKGROUND OF THE INVENTION

### Field of the Invention:

The present invention relates to a rodless cylinder, and more specifically to a rodless cylinder wherein the load applied to a sliding table which is disposed outside a cylinder and displaced in accordance with the reciprocating motion of a piston, can be dispersed and supported on the cylinder side, thereby making it possible to smoothly move the sliding table in accordance with the reciprocating motion of the piston.

### Description of the Related Art:

A rodless cylinder has recently been used in various ways as a workpiece feeding device in a factory or the like.

The rodless cylinder can be reduced in stroke as compared with a cylinder with a rod coupled thereto. Thus, the area occupied by the rodless cylinder is small and the rodless cylinder is easy to handle. The rodless cylinder can prevent dust or the like from entering as compared with the rod-coupled cylinder referred to above. As a result, a high-degree positioning operation can be effected. The rodless cylinder normally comprises a cylinder body having a slit defined therein so as to extend along the longitudinal direction thereof, and a sliding table. A piston loaded into the cylinder body is formed integrally with the sliding table by a connecting member.

This type of rodless cylinder has been disclosed in U.S. Pat. No. 4,373,427 or DE-PS 3,124,915, for example. In particular, the rodless cylinder described in DE-PS 3,124,915 is constructed such that a guide groove is defined in a given portion located outside a cylinder tube and a guiding means mounted to a leg which extends toward the given portion from the ends of the sliding table, is fitted in the guide groove. According to DE-PS 3,124,915, when a lateral force is applied, the guiding means is held against the guide groove so as to avoid an increase in width of a slit.

According to DE-PS 3,124,915, however, the leg should be disposed so as to extend toward a position far spaced from the outer side of the cylinder tube as seen from the sliding table and to hold the guiding means.

When the guiding means is fitted in the guide groove upon application of the lateral force under this construction, one end face of the cylinder tube, which defines the slit, forcibly approaches the other end face of the cylinder tube, which defines a slit on the opposed side. Thus, the inside diameter of a bore defined in the cylinder tube is reduced as a whole so that a piston is forcibly inactivated. That is, the piston stops moving when the lateral force is applied. In other words, a workpiece feeding operation is unexpectedly stopped, thereby causing a problem that a workpiece held in engagement with the sliding table cannot be smoothly fed.

The EP-A 0 294 350 discloses a guide arrangement in a linear power unit having a housing and a slide connected to a power source within said housing, said housing and said slide being linearly movable relative to each other for producing push and pull forces, wherein at least one guide rail is arranged parallel to the direction of action of said push and pull forces beside said housing, wherein the housing is fixedly connected to said guide rail, and wherein said slide is hingedly connected in a manner to transmit push and pull forces only, to a guide device guided by said guide rail.

### SUMMARY OF THE INVENTION

It is a general object of the present invention to provide a rodless cylinder capable of avoiding a reduction in diameter of a slit defined in a cylinder tube particularly even when unexpected forces are applied from horizontal and vertical directions, activating a piston at all times and smoothly reciprocating a sliding table.

It is another object of the present invention to provide a rodless cylinder comprising the features of claim 1.

It is a further object of the present invention to provide a rodless cylinder wherein the first and second guide members comprise rail-shaped members respectively.

It is a still further object of the present invention to provide a rodless cylinder wherein the first support member comprises a linear guide member and the second support member comprises a guide roller.

It is a still further object of the present invention to provide a rodless cylinder wherein the first guide member comprises a first rail-shaped member held in engagement with the linear guide member which serves as the first support member and the second guide member comprises a second rail-shaped member held in engagement with the guide roller which serves as the second support member.

It is a still further object of the present invention to provide a rodless cylinder wherein the linear guide member has a plurality of ball bearings disposed substantially at equal intervals.

It is a still further object of the present invention to provide a rodless cylinder wherein the rail-shaped member used as the second guide member, is mounted on a third surface parallel to the rail-shaped member used as the first guide member.

It is a still further object of the present invention to provide a rodless cylinder wherein the third surface is formed on an extension which projects from the cylinder body.

It is a still further object of the present invention to provide a rodless cylinder wherein the sliding table has first and second surfaces used to receive loads thereon from different directions respectively, and a first guide member and a first support member held in engagement with the first guide member are mounted on a first side of a cylinder body and the first surface of the sliding table respectively, the first support member serving so as to support any load applied from all directions when the loads are applied to the sliding table from the different directions.

It is a still further object of the present invention to provide a rodless cylinder wherein the first guide member has slant surfaces formed so as to extend each other and to bear any load applied to the sliding table from all directions.

The above and other objects, features and advantages of the present invention will become apparent from the following description and the appended claims, taken in conjunction with the accompanying drawings in which preferred embodiments of the present invention are shown by way of illustrative example.

### BRIEF DESCRIPTION OF THE DRAWINGS

FIG. 1 is a perspective view showing a rodless cylinder according to one embodiment of the present invention;
FIG. 2 is a perspective view illustrating a body of the rodless cylinder shown in FIG. 1;
FIG. 3 is a vertical cross-sectional view showing the body of the rodless cylinder shown in FIG. 1 and a sliding table thereof;
FIG. 4 is a perspective view depicting the sliding table of the rodless cylinder shown in FIG. 1;
FIG. 5 is a perspective view illustrating a piston employed in the rodless cylinder shown in FIG. 1;
FIG. 6 is a cross-sectional view taken along line VI - VI of FIG. 1;
FIG. 7 is a partly cut vertical cross-sectional view showing the manner of fitting of a first sealing member employed in the rodless cylinder shown in FIG. 1 in a slit; and
FIG. 8 is a vertical cross-sectional view showing both a body and a sliding table of a rodless cylinder according to another embodiment, which is different from the rodless cylinder shown in FIG. 1.

### DETAILED DESCRIPTION OF THE PREFERRED EMBODIMENTS

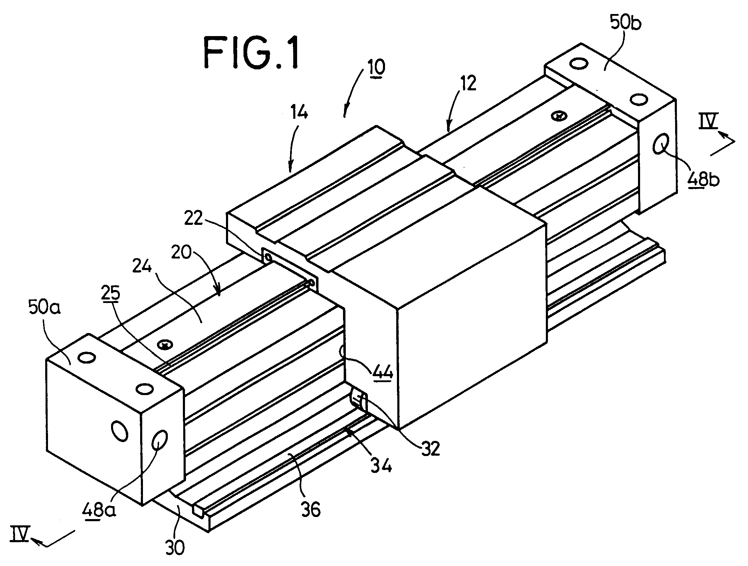

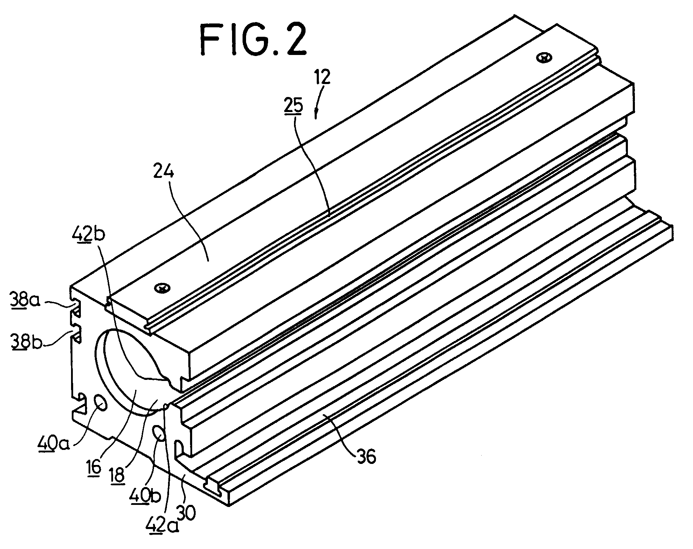

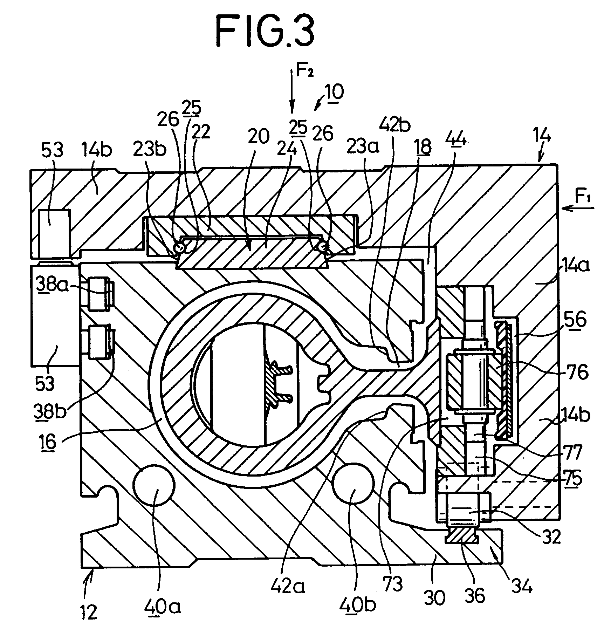

In FIG. 1, reference numeral 10 indicates a rodless cylinder according to one embodiment of the present invention. The rodless cylinder 10 comprises a cylinder body 12 and an L-shaped sliding table 14. The cylinder body 12 has a bore 16 which is defined therein and extends along the longitudinal direction thereof (see FIG. 2). The bore 16 communicates with the outside through a slit 18 which is defined in one side of the cylinder body 12 and extends along the longitudinal direction thereof. A first support member 20, which is held in engagement with a linear guide member 22 mounted to the sliding table 14, is formed on the upper surface of the cylinder body 12, which is held against the sliding table 14. The first support member 20 comprises a rail-shaped member 24 having dovetail cross-sectional, i.e., enlarged slant surfaces 23a, 23b which extend along the longitudinal direction of the cylinder body 12. The rail-shaped member 24 has opposed grooves 25 used to receive a plurality of ball bearings 26 therein and linearly defined in both sides thereof along the longitudinal direction thereof (see FIG. 2). On the other hand, the cylinder body 12 has an extension 30 which has a surface parallel to the upper surface of the cylinder body 12 and projects from the slit 18 side. The extension 30 has a rail 36 which is formed on the surface thereof so as to extend along the longitudinal direction thereof and held in engagement with a pair of roll bearings 32, 32 mounted to the ends of the sliding table 14 so as to form a second support member 34. Each of the roll bearings 32 may be replaced by a cam follower. As shown in FIG. 3, elongated grooves 38a, 38b, which extend along the longitudinal direction of the cylinder body 12 and are used to fit at least one sensor thereon, are defined in one side of the cylinder body 12, which is opposite to the extension 30. Further, fluid passages 40a, 40b used for centralized piping are defined in the cylinder body 12 so as to extend along the longitudinal direction thereof.

As described above, the slit 18 enables the bore 16 and the outside to communicate with each other. However, steps 42a, 42b are provided in continuation with their corresponding parallel wall surfaces 92a, 92b for defining the slit 18, and formed so as to spread out toward the bore 16. Referring to FIG. 3, a surface, which vertically extends on the side opposite the bore 16 from the wall surfaces 92a, 92b of the slit 18, is formed as a vertical surface, which is in turn used so as to define an interval or gap 44 between the vertical face and the slide table 14.

Both ends of the cylinder body 12 constructed as described above are airtightly closed by end caps 50a, 50b with ports 48a, 48b defined therein, respectively (see FIG. 1). In this case, a piston can be displaced by making use of either one of the fluid passages 40a, 40b, e.g., the fluid passage 40a without defining the port 48b in the end cap 50b or by closing the port 48b with a blank cap. In this case as well, a port different from the port 48a can be defined in the end cap 50a so as to communicate with the fluid passage 40a. That is, if the other end of the fluid passage 40a is opened within the bore 16 on the end cap 50b side, the piston can be displaced. Incidentally, reference numeral 53 in FIG. 3 indicates a sensor for detecting the position of either the piston or the sliding table 14.

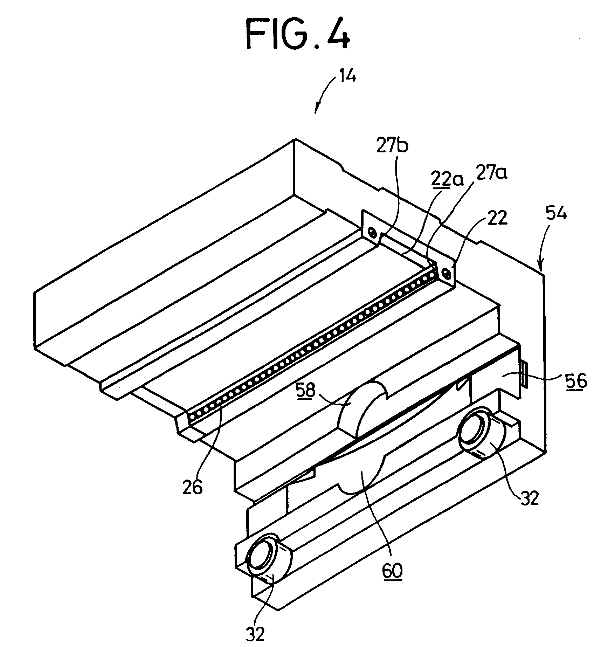

The sliding table 14 will be next be described. As shown in FIGS. 3 and 4, the sliding table 14 comprises an L-shaped and relatively thick block 54. A linear guide member 22 held against the rail-shaped member 24 is mounted on a plate having one side 14b of the block 54, which is opposite to the upper surface of the cylinder body 12, so as to extend along the longitudinal direction of the sliding table 14. A plurality of ball bearings 26 are linearly disposed inside the linear guide member 22 at equal intervals. As is apparent from the drawing, the linear guide member 22 has enlarged slant surfaces 27a, 27b formed thereinside, which extend in a facing relationship to the slant surfaces 23a, 23b of the rail-shaped member 24. On the other hand, a groove 56 is defined in the center of a plate having the other side 14a of the sliding table 14 so as to extend along the longitudinal direction of the sliding table 14. An elliptically-enlarged space 58 is defined substantially in the center of the groove 56. As is apparent from FIG. 4, the groove 56 has a concave portion 60 curved toward the surface of the block 54 shown in FIG. 3, which is opposite to the cylinder body 12. The pair of roll bearings 32, 32, which are held in engagement with the rail 36 mounted on the extension 30 of the cylinder body 12 so as to form the second support member 34 as described above, are mounted to the end of the side 14a of the plate of the block 54.

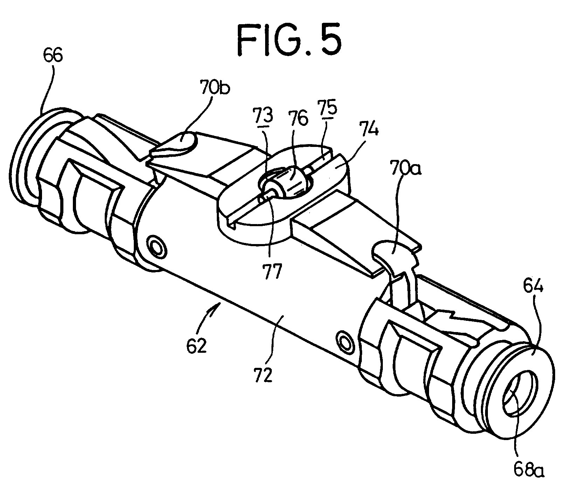

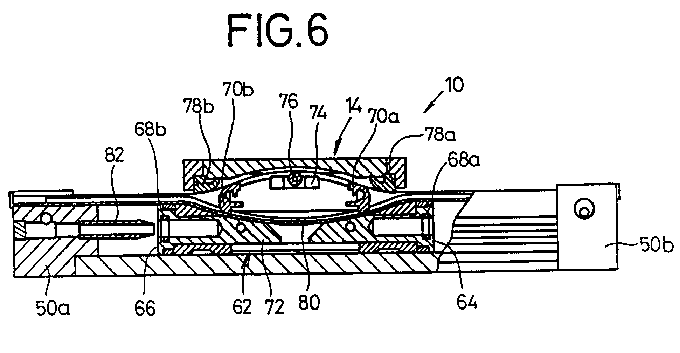

FIG. 5 shows a piston 62. The piston 62 has a first pressure-receiving surface 64 and a second pressure-receiving surface 66 formed on the side opposite the first pressure-receiving surface 64. Further, the piston 62 has cushion seals 68a, 68b provided therein (see FIG. 5). Belt separators 70a, 70b are disposed above the cylindrical piston and fixedly mounted on a piston yoke 72. A coupler 74 having a circular space 73 defined centrally therein is formed in an expanded state so as to be placed above the piston yoke 72. A roller 76 is rotatably supported by the coupler 74. That is, a groove 75 is defined in the elliptical coupler 74 along the major axis of the coupler 74, and a shaft 77 of the roller 76 is fitted in the groove 75. Accordingly, the roller 76 can be rotated within the space 73. As is apparent from FIG. 6, scrapers 78a, 78b are provided inside the sliding table 14. In this case, the coupler 74 is fitted in the space 58. Incidentally, reference numeral 80 in FIG. 6 indicates a passage for inserting a first sealing member to be described later into the piston, whereas reference numeral 82 indicates a cushion ring.

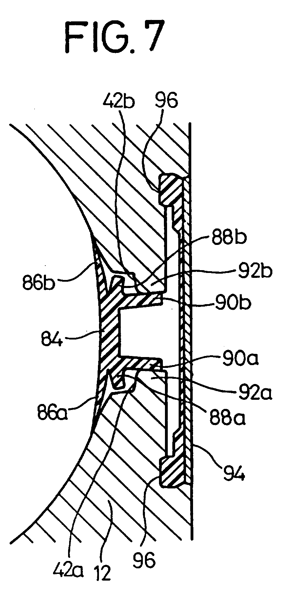

A first sealing member 84 fitted on the steps 42a, 42b will next be shown in FIG. 7. The first sealing member 84 has tongues 86a, 86b and extensions 88a, 88b which are disposed above the tongues 86a, 86b respectively. Further, the first sealing member 84 has engaging portions 90a, 90b which extend so as to be directed upward from the extensions 88a, 88b and slightly enlarged in an upward direction. The extensions 88a, 88b are used so as to be held in engagement with the steps 42a, 42b when internal pressure is applied to the piston. Further, the engaging portions 90a, 90b are held against the wall surfaces 92a, 92b which define the slit 18. The first sealing member 84 is integrally formed of a flexible synthetic resin as a whole. On the other hand, a second sealing member 94 is used to close the slit 18. The second sealing member 94 is fitted in opposed grooves 96 which extend along the longitudinal direction of the cylinder body 12 from a position above the slit 18 defined in the upper end of the cylinder body 12. Incidentally, the first sealing member 84 is inserted into the passage 80 of the piston 62, and both ends of the first sealing member 84 are fixed to the end caps 50a, 50b together with the second sealing member 94.

The rodless cylinder 10 according to the present invention is basically constructed as described above. Operations and effects of the rodless cylinder 10 will next be described below.

When compressed air is introduced from the port 48a, the compressed air passes through a path or passage defined in the cushion ring 82 and is pressed against the second pressure-receiving surface 66. Thus, the piston 62 is displaced to the right as seen in FIG. 6. Since the coupler 74 has been fitted in the space 58 of the sliding table 14 at this time, the piston 62 integrally displaces the sliding table 14 and moves it to the right in a manner similar to the displacement of the piston 62 to the right. At this time, the belt separators 70a, 70b are activated to cause the first sealing member 84 and the second sealing member 94 to be spaced away from each other between the sliding table 14 and the piston 62. Thus, when a workpiece is placed on the sliding table 14, for example, the workpiece can be moved to the right as seen in FIG. 6. It is needless to say that when the compressed air is introduced into the port 48b, the action opposite to the above action is effected.

Incidentally, the roller 76 is brought into sliding contact with the second sealing member 94 in the course of rotational motion of the roller 76 to facilitate the movement of the second sealing member 94.

Where an unexpected load, e.g., an unexpected load F₁ applied from the direction indicated by the arrow in FIG. 3 is now exerted on the sliding table 14 when the workpiece is fed under the action of displacement of the piston 62, the load F₁ is transmitted or applied to one side of the linear guide member 22 of the first support member 20 from the side 14a of the sliding table 14, and then transferred to the rail-shaped member 24 through the ball bearings 26.

When a load F₂ is applied to the side 14a of the sliding table 14 from the direction indicated by the arrow in FIG. 3, the load F₂ is directly transferred to the extension 30 of the cylinder body 12 from the roll bearing 32 of the second support member 34 through the rail 36. It is thus possible to avoid a situation in which when horizontal and vertical forces are applied to the sliding table in such a drawing as shown in the prior art, for example, the inside diameter of the bore 16 is reduced so that the frictional force increases between the bore 16 and the piston 62, thereby inactivating the piston 62 in the course of feeding of a workpiece toward a desired position.

Incidentally, the sensor 53 detects the positions of the piston 62 and the sliding table 14.

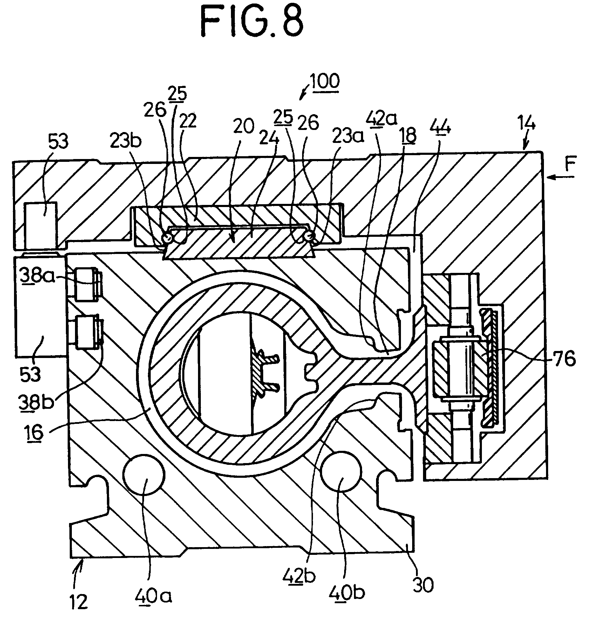

Further, another embodiment will be shown in FIG. 8. A rodless cylinder 100 according to the present embodiment is substantially identical in structure to the rodless cylinder 10 except for the second support member 34, the rail 36 and the roll bearings 32 all of which are employed in the rodless cylinder 10. Thus, the same elements of structure as those employed in the rodless cylinder 10 are identified by like reference numerals and their detail description will therefore be omitted.

When a load F₁ is applied to a sliding table 14 from the direction indicated by the arrow under the above construction, a slant surface 23a of a rail-shaped member 24 can receive the load F₁. In particular, this type of structure is used when the load applied to the sliding table 14 is relatively low. Since the number of parts can be reduced, the rodless cylinder 100 can be manufactured at a low cost.

According to the present invention as described above, even if any load is applied to the sliding table from the vertical and horizontal directions, either the sliding table or the piston moved in unison with the sliding table can be smoothly displaced without its operation stoppage.

Having now fully described the invention, it will be apparent to those skilled in the art that many changes and modifications can be made without departing from the scope of the invention as set forth herein.

## Claims

1. A rodless cylinder (10) comprising:
a cylinder body (12) having a slit (18) defined therein, said slit extending along the longitudinal direction of a cylinder tube whose ends are closed and enabling a bore (16) defined in said cylinder body to communicate with the outside;
a piston (62) reciprocatively moved within the bore of said cylinder body;
a sliding table (14) coupled to said piston by a connecting portion extending through said slit and moved in accordance with the reciprocating motion of said piston; and
first and second sealing members (84, 94) held in engagement with said piston and/or said sliding table so as to close said slit; **characterized in that** said slit (18) is defined in one side of said cylinder body (12);
said sliding table (14) is a L-shaped block (54) having first and second surfaces (14a, 14b) subjected to loads from different directions respectively, wherein said first upper surface (14b) is coupled to a workpiece and said second side surface (14a) is connected to said piston (62) through said slit (18),
said cylinder body having a first guide member (24) mounted on a first side thereof, which is opposed to said first surface (14b) of said sliding table (14), and a second guide member (36) mounted on a second side of said cylinder body (12), which is opposed to said second surface (14a) of said sliding table (14),
said sliding table (14) also having a first support member (22) provided on said first surface (14b) thereof so as to be held in engagement with said first guide member (24) of said cylinder body (12) and a second support member (32) provided on said second surface (14a) thereof so as to be held in engagement with said second guide member (36);
said first and second support members (22, 32) serving so as to disperse and support said loads when said loads are applied from the same direction.

2. A rodless cylinder according to claim 1, wherein said first and second guide members comprise rail-shaped members (24, 36) respectively.

3. A rodless cylinder according to claim 1, wherein said first support member (22) comprises a linear guide member and said second support member (32) comprises a guide roller.

4. A rodless cylinder according to claim 1, wherein said first guide member (24) comprises a first rail-shaped member held in engagement with said linear guide member which serves as said first support member and said second guide member (36) comprises a second rail-shaped member held in engagement with said guide roller (32) which serves as said second support member.

5. A rodless cylinder according to claim 3 or 4, wherein said linear guide member has a plurality of ball bearings (26) disposed substantially at equal intervals.

6. A rodless cylinder according to claim 2, wherein said rail-shaped member (36) used as said second guide member, is mounted on a third surface parallel to said rail-shaped member (24) used as said first guide member.

7. A rodless cylinder according to claim 6, wherein said third surface is formed on an extension (30) which projects from said cylinder body.

8. A rodless cylinder according to claim 1, wherein said sliding table (14) has first and second surfaces (14a, 14b) which are used to receive loads thereon from different directions respectively, and a first guide member (24) and a first support member (22) held in engagement with said first guide member are mounted on a first side of a cylinder body (12) and said first surface of said sliding table respectively, said first support member (22) serving so as to support any load applied from all directions when the loads are applied to said sliding table from the different directions.

9. A rodless cylinder according to claim 8, wherein said first guide member (24) has slant surfaces (23a, 23b) formed so as to extend each other and to bear any load applied to said sliding table from all directions.

## Patentansprüche

1. Stangenloser Zylinder (10) mit:
einem Zylinderkörper (12), in dem ein Schlitz (18) ausgebildet ist, wobei sich der Schlitz entlang der Längsrichtung eines Zylinderrohres erstreckt, dessen Enden geschlossen sind, und die Verbindung einer in dem Zylinderkörper ausgebildeten Bohrung (16) nach außen schafft;
einem Kolben (62), der in der Bohrung des Zylinderkörpers hin und herbewegt wird;
einem Gleittisch (14), der über einen sich durch den Schlitz erstreckenden Verbindungsabschnitt mit dem Kolben gekoppelt ist und sich entsprechend der hin- und hergehenden Bewegung des Kolbens bewegt; und
ersten und zweiten Dichtelementen (84, 94), die im Eingriff mit dem Kolben und/oder dem Gleittisch gehalten werden, um den Schlitz zu schließen;
dadurch gekennzeichnet, daß der Schlitz (18) in einer Seite des Zylinderkörpers (12) ausgebildet ist;
daß der Gleittisch (14) ein L-förmiger Block (54) mit ersten und zweiten Flächen (14a, 14b) ist, die Belastungen von entsprechenden unterschiedlichen Richtungen ausgesetzt sind, wobei die erste obere Fläche (14b) mit einem Werkstück gekoppelt ist und wobei die zweite Seitenfläche (14a) durch den Schlitz (18) mit dem Kolben (62) verbunden ist,
wobei der Zylinderkörper ein erstes Führungselement (54) aufweist das an einer ersten Seite hiervon angebracht ist, die der ersten Fläche (14b) des Gleittischs (14) gegenüberliegt, und ein zweites Führungselement (36), das an einer zweiten Seite des Zylinderrohres (12) angebracht ist, die der zweiten Fläche (14a) des Gleittisches (14) gegenüberliegt,
wobei der Gleittisch (14) außerdem ein erstes Stützelement (22) aufweist, das an seiner ersten Fläche (14b) vorgesehen ist, um in Eingriff mit dem ersten Führungselement (24) des Zylinderkörpers (12) gehalten zu werden, und ein zweites Stützelement (32), das an seiner zweiten Fläche (14a) vorgesehen ist, um in Eingriff mit dem zweiten Führungselement (36) gehalten zu werden;
wobei die ersten und zweiten Stützelemente (22, 32) dazu dienen, die Lasten zu zerstreuen und aufzunehmen, wenn die Lasten von derselben Richtung aufgebracht werden.

2. Stangenloser Zylinder nach Anspruch 1, wobei die ersten und zweiten Führungselemente jeweils schienenförmige Elemente (24, 36) aufweisen.

3. Stangenloser Zylinder nach Anspruch 1, wobei das erste Stützelement (22) ein lineares Führungselement aufweist und wobei das zweite Stützelement (32) eine Führungsrolle aufweist.

4. Stangenloser Zylinder nach Anspruch 1, wobei das erste Führungselement (24) ein ersten schienenförmiges Element aufweist, das in Eingriff mit dem linearen Führungselement gehalten wird, welches als erstes Stützelement dient, und wobei das zweite Führungselement (36) ein zweites schienenförmiges Element aufweist, das in Eingriff mit der Führungsrolle (32) gehalten wird, welche als zweites Stützelement dient.

5. Stangenloser Zylinder nach Anspruch 3 oder 4, wobei das lineare Führungselement eine Vielzahl von Kugellagern (26) aufweist, die im wesentlichen in gleichen Abständen angeordnet sind.

6. Stangenloser Zylinder nach Anspruch 2, wobei das schienenförmige Element (36), das als zweites Führungselement verwendet wird, an einer dritten Fläche parallel zu dem schienenförmigen Element (24), das als erstes Führungselement verwendet wird, angebracht ist.

7. Stangenloser Zylinder nach Anspruch 6, wobei die dritte Fläche an einer Verlängerung (30) ausgebildet ist, die von dem Zylinderkörper vorsteht.

8. Stangenloser Zylinder nach Anspruch 1, wobei der Gleittisch (14) erste und zweite Flächen (14a, 14b) aufweist, die zur Aufnahme von Lasten aus unterschiedlichen Richtungen verwendet werden, und ein erstes Führungselement (24) und ein erstes Stützelement (22), die in Eingriff mit dem ersten Führungselement gehalten werden, sind an einer ersten Seite eines Zylinderkörpers (12) bzw. der ersten Fläche des Gleittisches angebracht, wobei das erste Stützelement (22) dazu dient, jede Last, die von allen Richtungen aufgebracht wird, aufzunehmen, wenn die Lasten auf den Gleittisch von den unterschiedlichen Richtungen aufgebracht werden.

9. Stangenloser Zylinder nach Anspruch 8, wobei das erste Führungselement (24) geneigte Flächen (23a, 23b) aufweist, die so ausgebildet sind, daß sie einander verlängern und jede Last aufnehmen, die auf den Gleittisch von allen Richtungen aufgebracht wird.

## Revendications

1. Vérin (10) sans tige comprenant:
un corps (12) de vérin comportant une fente (18) qui y est formée, ladite fente s'étendant suivant la direction longitudinale d'un tube cylindrique dont les extrémités sont fermées et permettant à un alésage (16) formé dans ledit corps de vérin de communiquer avec l'extérieur;
un piston (62) déplacé suivant un mouvement de va-et-vient à l'intérieur de l'alésage dudit corps de vérin;
une table coulissante (14) couplée audit piston par une partie d'accouplement s'étendant à travers ladite fente et déplacée en conformité avec le mouvement de va-et-vient dudit piston; et
des premier et second éléments d'étanchéité (84, 94) maintenus en contact avec ledit piston et/ou ladite table coulissante de manière à fermer ladite fente;
caractérisé en ce que :
ladite fente (18) est formée dans un des côtés dudit corps (12) de vérin;
ladite table coulissante (14) est un bloc (54) en forme de L comportant des première et seconde surfaces (14a, 14b) soumises à des charges arrivant selon différentes directions, respectivement, ladite première surface supérieure (14b) étant couplée à une pièce à usiner et ladite seconde surface latérale (14a) étant raccordée audit piston (62) à travers ladite fente (18);
ledit corps de vérin comportant un premier élément de guidage (24) monté sur un premier côté de ce corps, lequel côté se trouve en face de ladite première surface (14b) de ladite table coulissante (14), et un second élément de guidage (36) monté sur un second côté dudit corps (12) de vérin, lequel côté se trouve en face de ladite seconde surface (14a) de ladite table coulissante (14);
ladite table coulissante (14) comportant aussi un premier élément de support (22) présent sur ladite première surface (14b) de cette table de manière à être maintenu en contact avec le premier élément de guidage (24) dudit corps (12) de vérin et un second élément de support (32) présent sur ladite seconde surface (14a) de ladite table de manière à être maintenu en contact avec ledit second élément de guidage (36);
lesdits premier et second éléments de support (22, 32) servant à disperser et supporter lesdites charges quand lesdites charges sont appliquées selon la même direction.

2. Vérin sans tige selon la revendication 1, dans lequel lesdits premier et second éléments de guidage comprennent, respectivement, des éléments (24, 36) en forme de rails.

3. Vérin sans tige selon la revendication 1, dans lequel ledit premier élément de support (22) comprend un élément de guidage linéaire et ledit second élément de support (32) comprend un galet de guidage.

4. Vérin sans tige selon la revendication 1, dans lequel ledit premier élément de guidage (24) comprend un premier élément en forme de rail maintenu en contact avec ledit élément de guidage linéaire qui sert de premier élément de support précité, et ledit second élément de guidage (36) comprend un second élément en forme de rail maintenu en contact avec ledit galet de guidage (32) qui sert de second élément de support précité.

5. Vérin sans tige selon la revendication 3 ou 4, dans lequel ledit élément de guidage linéaire comporte une pluralité de roulements à billes (26) sensiblement équidistants.

6. Vérin sans tige selon la revendication 2, dans lequel ledit élément (36) en forme de rail, utilisé comme second élément de guidage précité, est monté sur une troisième surface parallèle audit élément (24) en forme de rail, utilisé comme premier élément de guidage précité.

7. Vérin sans tige selon la revendication 6, dans lequel ladite troisième surface est formée sur un prolongement (30) qui fait saillie dudit corps de vérin.

8. Vérin sans tige selon la revendication 1, dans lequel ladite table coulissante (14) comporte des première et seconde surfaces (14a, 14b) qui sont utilisées de manière à recevoir des charges qui leur sont appliquées selon différentes directions, respectivement, et un premier élément de guidage (24) ainsi qu'un premier élément de support (22), maintenu en contact avec ledit premier élément de guidage, sont montés sur une premier côté du corps (12) de vérin et sur ladite première surface de ladite table coulissante, respectivement, ledit premier élément de support (22) servant à supporter toute charge appliquée selon toutes les directions quand les charges sont appliquées à ladite table coulissante selon les différentes directions.

9. Vérin sans tige selon la revendication 8, dans lequel ledit premier élément de guidage (24) comporte des surfaces inclinées (23a, 23b) formées de manière à s'étendre l'une vers l'autre et à supporter toute charge appliquée à ladite table coulissante selon toutes les directions.
